Europäisches Patentamt

(19) **European Patent Office**

**Office européen des brevets**

(11) Numéro de publication: **0 128 802**

**B1**

(12) **FASCICULE DE BREVET EUROPEEN**

(45) Date de publication du fascicule du brevet: **13.07.88**

(51) Int. Cl.⁴: **B 29 D 11/00, B 32 B 31/00**

(21) Numéro de dépôt: **84401074.4**

(22) Date de dépôt: **24.05.84**

(54) **Procédé et dispositif pour recouvrir une ébauche d'un verre de lunettes par une feuille de protection.**

(30) Priorité: **25.05.83 FR 8308580**

(43) Date de publication de la demande:
**19.12.84 Bulletin 84/51**

(45) Mention de la délivrance du brevet:
**13.07.88 Bulletin 88/28**

(84) Etats contractants désignés:
**AT BE CH DE FR GB IT LI LU NL SE**

(56) Documents cités:
**FR-A-2 230 599**
**FR-A-2 325 483**
**GB-A- 417 726**
**GB-A- 594 651**

(73) Titulaire: **SAINT-GOBAIN VITRAGE**
**Les Miroirs 18, avenue d'Alsace**
**F-92400 Courbevoie (FR)**
(84) **BE CH FR GB IT LI LU NL SE AT**

(73) Titulaire: **VEGLA Vereinigte Glaswerke GmbH**
**Viktoriaallee 3-5**
**D-5100 Aachen (DE)**
(84) **DE**

(72) Inventeur: **Grumbach, Richard**
**Forsterheider Strasse 17**
**D-5100 Aachen (DE)**
Inventeur: **Schilde, Heinz-Josef**
**Salmanusstrasse 40**
**D-5102 Wuerselen (DE)**
Inventeur: **Tiedemann, Helmut**
**Maarstrasse 37**
**D-5112 Baesweiler (DE)**

(74) Mandataire: **Muller, René et al**
**SAINT-GOBAIN RECHERCHE 39, quai Lucien**
**Lefranc**
**F-93304 Aubervilliers (FR)**

Courier Press, Leamington Spa, England.

## Description

La présente invention a pour objet un procédé et un dispositif pour recouvrir la surface d'une ébauche d'un verre de lunettes par une feuille en matière plastique dans lesquels on applique la feuille en matière plastique sur l'ébauche en verre grâce à un organe de pressage élastique tout en éliminant l'air. Eventuellement, on peut réaliser une étape supplémentaire et obtenir l'adhérence finale souhaitée entre la feuille en matière plastique et l'ébauche en verre, en appliquant des conditions de température et de pression bien supérieures.

On utilise des procédés de ce type décrits par exemple dans la publication de brevet européen O 026 140, lorsqu'on souhaite recouvrir des verres de protection ou des verres de lunettes par une feuille en matière plastique transparente qui sert de feuille anti-éclats. Par exemple, la publication de brevet allemand DE AS 26 29 779 décrit de telles feuilles anti-éclats, qui sont notamment en polyuréthane à haute élasticité ayant des propriétés d'autocicatrisation.

Ces propriétés confèrent à la feuille une meilleure résistance aux rayures qui disparaissent alors très rapidement. De telles feuilles peuvent également servir à l'élaboration de verres plastiques qui ne soient pas rayables. La publication de brevet allemand DE OS 26 34 816 décrit par exemple des verres plastiques ainsi revêtues.

L'application de telles feuilles de protection sur du verre de silicate ou du verre organique (en matière plastique) pose en particulier un certain nombre de problèmes quand la surface à recouvrir est concave. En premier lieu, on risque un grignage de la feuille du au fait que la feuille, plane en elle-même, doit se prêter à une surface courbe. Par ailleurs, lorsque l'on recouvre des surfaces sphériques bombées, il se forme, dans une direction radiale au pressage, des canaux dans lesquels s'écoule de préférence l'air déplacé, ce qui entraîne une mauvaise adhérence de la feuille.

En raison des problèmes spécifiques qui se posent lorsqu on souhaite recouvrir des surface sphériques, on a reconnu que des procédés en plusieura étapes se révélaient particulièrement avantageux. De préférence, on met en oeuvre un procédé en trois étapes. La demande de brevet français n° 82 12 542 décrit en détail une possibilité de réalisation de la première étape du procédé, à savoir la mise en place d'un morceau de feuille sur l'ébauche en verre ou en plastique, et son maintien provisoire dans cette position. A la fin de cette première étape, on est en présence d'une ébauche, en verre ou en plastique, sur laquelle la feuille est fixée de façon à ce que l'on puisse manipuler l'ébauche sans risque de décollement de la feuille. Il se trouve encore entre la feuille et la surface de l'ébauche une quantité relativement importante d'air qui, dans une deuxième étape, object de l'invention, doit être expulsée radialement.

L'invention se propose, dans le cadre de la deuxième étape du procédé de recouvrement, où on engage la feuille par pression au moyen d'un organe de pressage en caoutchouc en forme de calotte sphérique, d'empêcher la formation de canaux d'évacuation de l'air dans une direction radiale privilégiée, et d'obtenir en revanche un écoulement régulier de l'air sur toute la périphérie de l'ébauche.

Dans cette perspective, l'invention propose d'insérer entre l'organe de pressage élastique et la feuille à plaquer, une membrane élastique qui se superpose à l'ébauche qui porte la feuille, que l'on abaisse avant ou pendant le pressage, et grâce à laquelle on peut appliquer de façon homogène toute la zone de pourtour de la feuille contre le bord de l'ébauche.

En intercalant, dans le procédé selon l'invention, une membrane et en l'abaissant sur la feuille à plaquer avec une force de pression déterminée et, le cas échéant, réglable, on empêche la formation de canaux d'évacuation de l'air enfermé entre l'ébauche et la feuille de protection dans une direction radiale privilégiée. Bien au contraire, il apparaît sur toute la périphérie de l'ébauche une résistance constante et uniforme à l'écoulement de l'air. Les propriétés élastiques de la membrane sont à cet égard déterminantes pour assurer l'uniformité de la résistance à l'écoulement: la feuille de protection est ainsi serrée avec la même force contre le bord de l'ébauche sur toute sa périphérie. L'application du procédé selon l'invention permet de supprimer totalement les défauts de doublage imputables à la création de passages préférentiels d'écoulement d'air.

Dans une forme de réalisation préférée de l'invention, on perce la membrane élastique, sur une zone qui déborde des bords de l'ébauche, d'incisions régulièrement espacées. Elles servent essentiellement à faire en sorte que la feuille de protection soit pressée uniformément sur le pourtour de l'ébauche, mais également que, la pression étant plus faible dans ces incisions, il se forme une grande quantité de chemins d'évacuation possibles pour l'air. En outre, la structure de ces fentes ou incisions favorise l'échappement de l'air qui se trouve entre la membrane et la feuille de protection.

Selon un des aspects avantageux du procédé, on augmente la pression exercée par la membrane sur la zone de pourtour au fur et à mesure de la progression de l'application de l'organe de pressage élastique. A cet effet, la périphérie de la membrane peut être abaissée à un niveau inférieur à celui du bord de l'ébauche.

L'invention coucerne ainsi un dispositif pour, la réalisation du procédé. Ce dispositif est caractérisé par les éléments de la revendication 3. Les revendications dépendantes 4 à 11 coucernent des modes particuliers de réalisation de ce dispositif.

D'autres formes de réalisation conformes au but de l'invention et particulièrement avantageuses apparaîtront au cours de la description suivante, en relation avec les planches de dessin annexées 1 à 6, et dans laquelle on décrit différents dispositifs pour la mise en oeuvre du procédé selon l'invention.

La figure 1 représente une coupe verticale d'une presse mécanique ouverte avec une membrane intercalée, selon le principe de l'invention.

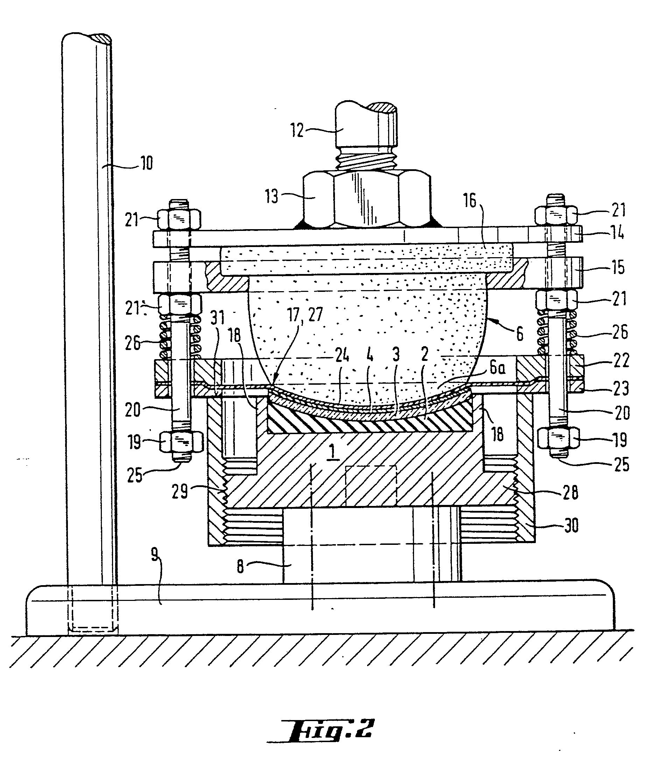

La figure 2 représente la presse de la figure 1 en cours de fonctionnement, c'est-a-dire en position fermée.

La figure 3 représente un autre dispositif pour réaliser l'invention, en position ouverte et la figure 4 le même dispositif en position fermée.

La figure 5 illustre une membrane encastrée dans un anneau de blocage avec des fentes disposées en cercle.

La figure 6 illustre une membrane du type de la figure 5 avec une disposition préférée des fentes.

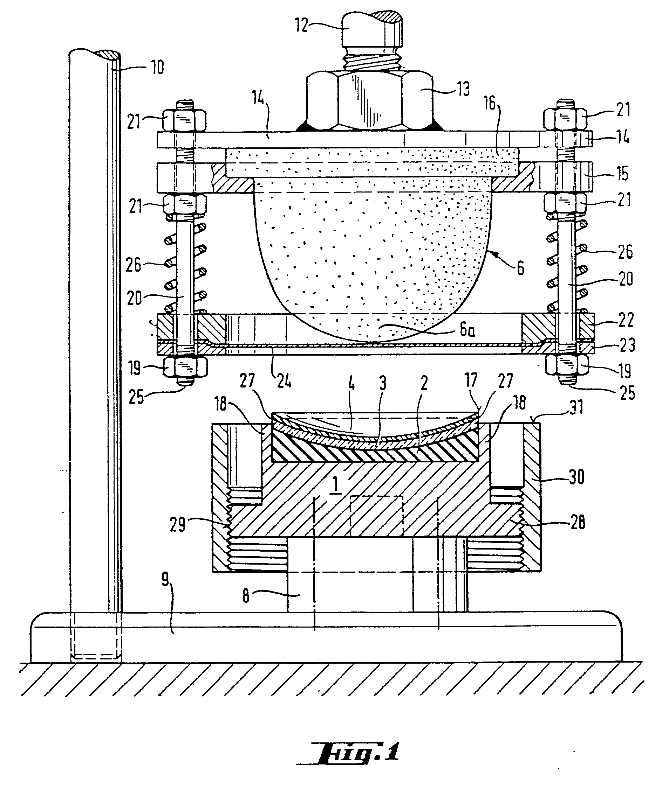

La presse de la figure 1 comprend une matrice 1 avec un support 2 de l'ébauche en verre 3 et un organe de pressage 6 agissant par translation verticale comme un poinçon. La matrice 1 est posée sur un socle 8 qui pour sa part est fixé sur un pied 9. Le poteau 10 relie le pied 9 à l'organe de pressage 6. Un système de levier avec des glissières, non représenté sur la figure, est fixé sur le poteau 10. Un arbre 12 auquel est fixé grâce à l'écrou 13 une plaque d'appui 14 est monté sur ce système de levier. On insère entre la plaque d'appui 14 et l'anneau d'assemblage 15 le cordon 16 de fixation de l'organe de pressage 6.

La mise en route de la presse peut, suivant les types de construction, se faire à la main ou à la machine. Mais en tant que tel, le dispositif de commande de la presse n'est pas essentiel à la compréhension de l'invention, il ne sera donc pas décrit en détail.

L'organe de pressage 6 se compose d'une matière susceptible de déformation élastique, par exemple du caoutchouc. La partie inférieure 6a a une forme de calotte sphérique et peut être un corps creux ou tout corps plein approprié. On peut par exemple utiliser avec profit un caoutchouc de silicone possédant une dureté shore d'environ 40.

Le support 2 de l'ébauche en verre 3 est constitué de la même façon d'une matière déformable, par exemple le même caoutchouc de silicone que l'organe de pressage 6. La forme de la face supérieure de ce support 2, qui sert de surface de dépôt de l'ébauche en verre 3 correspond à celle de l'ébauche. La paroi cylindrique 18 de la matrice 1 borde latéralement ce support.

Des boulons filetés 20 sont disposés de façon visible sous la plaque d'appui 14. Deux écrous 21 garnissent la portion supérieure filetée de ces boulons; ils permettent de fixer l'anneau d'assemblage 15 à la plaque d'appui 14 par l'intermédiaire du cordon 16. Le corps de ces boulons 20 sert à mettre en place, par un système de glissement, l'anneau de blocage 22, 23 de la membrane 24 à la hauteur désirée. La membrane se trouve à une hauteur telle qu'elle touche l'organe de pressage 6. Dans cette position, l'anneau de blocage 22, 23, repose sur les écrous 19 qui sont vissées sur les portions inférieures 25 des boulons 20. On place un ressort spiral 26 sur le corps des boulons 20, afin que l'anneau de blocage 22, 23 soit poussé avec la force adéquate.

La matrice 1 est pourvue d'un épaulement annulaire 28 qui présente un filetage 29 sur sa surface extérieure cylindrique. Une bague d'appui 30 réglable en hauteur et ayant la forme d'un cylindre creux est vissée sur le filetage. Au cours du pressage, l'anneau de blocage 22, 23 de la membrane 24 vient se placer sur cette bague d'appui 30. C'est le niveau 31 de la surface portante de cette bague qui détermine par conséquent le degré de tension de la membrane 24 juste avant le pressage proprement dit, et donc également la force avec laquelle la membrane 24 est serrée contre la zone de pourtour 17 de la feuille de protection 4, et avec laquelle cette dernière est pressée contre le bord 27 de l'ébauche 3.

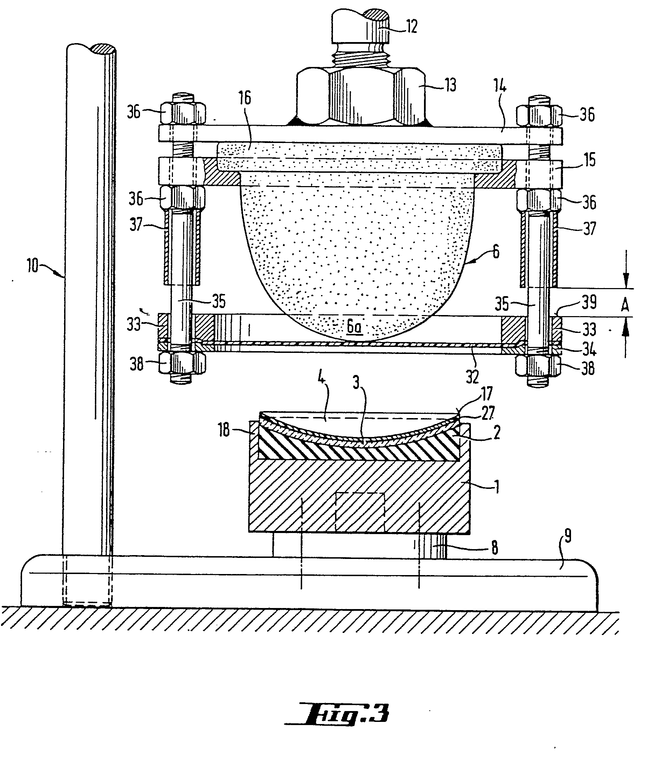

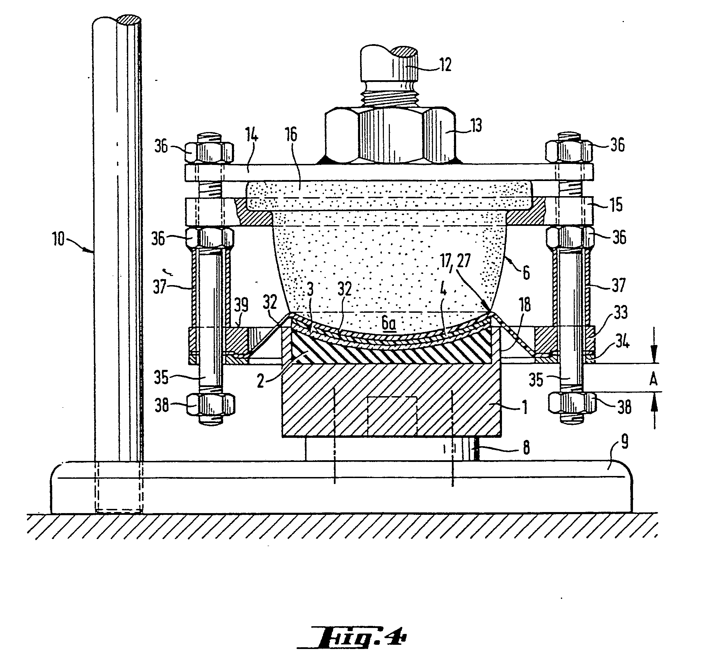

La forme de réalisation illustrée par les figures 3 et 4 correspond, en ce qui concerne la matrice 1, l'organe de pressage 6, son montage et son maintien, à ce qui a été précédemment décrit. De même, la membrane 32 est encastrée dans un anneau de blocage comprenant deux éléments 33, 34 et mobile par glissement grâce aux boulons 35. Lorsque la presse est ouverte, l'anneau de blocage 33, 34 repose sur l'écrou 38 réglable en hauteur. Mais dans ce cas, il n'est plus soutenu au cours du pressage mais, dans la dernière étape de pressage, il est abaissé en même temps que le poinçon 6, de sorte que la périphérie de la membrane est abaissée progressivement à un niveau inférieur à celui des bords de l'ébauche: on augmente ainsi progressivement la tension de la membrane sur la zone de pourtour 17, 27 accroissant ainsi la pression exercée par elle sur cette zone de pourtour dans la dernière étape du pressage proprement dit. A cette fin, on garnit les écrous 36 qui permettent de relier l'organe de pressage 6 à l'anneau d'assemblage 15, de manchons 37 qui s'étendent sur le corps des boulons 35. L'espace A compris entre l'extrémité des marchons 37 et la surface 39 de l'anneau de blocage 33, 34 détermine le trajet suivi par l'organe de pressage 6, ce qui fait que, pendant la première étape du pressage, simplement sous l'effet de la force déterminée par le poids propre de l'anneau de blocage 33, 34, la membrane 32 est pressée contre le bord 17 de la feuille de protection 4. Quand cette distance a été parcourue, et comme cela apparaît sur la figure 4, la membrane 32 est, du fait de la poursuite de l'abaissement de l'anneau de blocage 33, 34 imposée par les marchons 37, de plus en plus tendue et plus fortement pressée contre la zone de pourtour 17 de la feuille de protection 4.

La membrane 24 ou 32 se compose d'une feuille en caoutchouc de silicone, d'environ 1 mm d'épaisseur et à haute limite d'élasticité. Par exemple, on utilisera avec profit dans cette application, des feuilles en caoutchouc de silicone dont la tension de rupture est de 6 à 10 N/mm$^2$ environ, et qui présentent une élongation à la rupture élevée de l'ordre de 400 à 800 %, ainsi qu'une résistance au déchirement élevée de l'ordre de 100 à 400 N/cm.

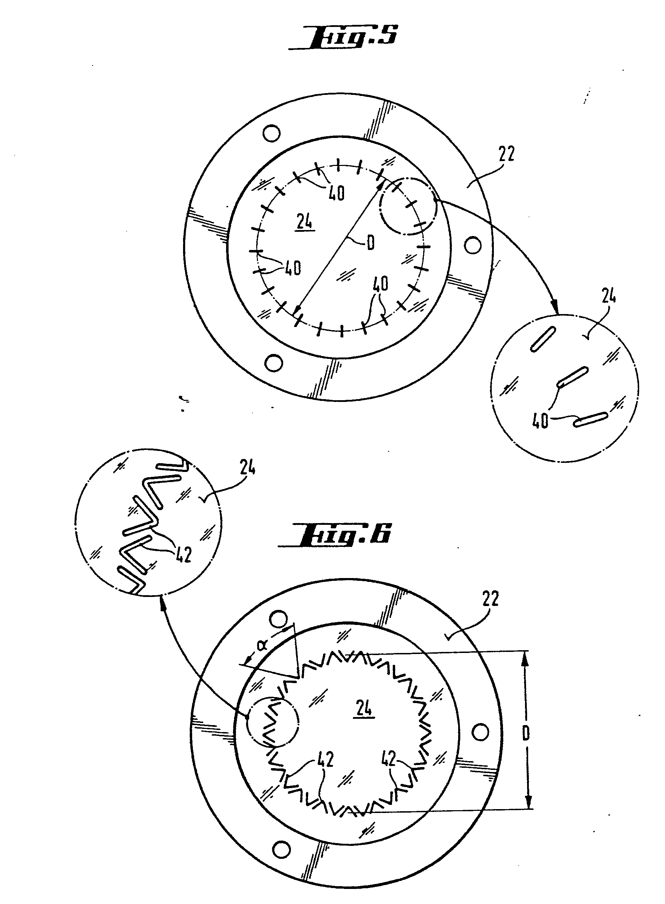

La figure 5 représente une membrane 24 maintenue par l'anneau 22 et percée, sur un cercle de diamètre D, de fentes 40. Le diamètre du cercle correspond au diamètre de l'ébauche de verres de lunettes 3 que l'on cherche à recouvrir de la feuille de protection 4. Les incisions en forme de fentes pratiquées dans la membrane 24 peuvent aussi bien, comme cela est représenté à la figure 6, être accolées deux par deux, de façon à former un angle α, le sommet de l'angle étant alternativement dirigé radialement dans un sens ou l'autre. Comme précédemment, ces fentes d'une forme particulière sont réparties sur un cercle dont le diamètre D correspond à celui de l'ébauche 3.

Le mode de fonctionnement et l'efficacité du procédé selon l'invention sera décrit en relation avec la figure 1. On extrait d'un réservoir non représenté des ébauches de verres de lunettes 3, un morceau de feuille de protection 4 étant fixé sur leur face concave, et on place la face convexe sur un substrat 2. La face concave de l'ébauche, pourvue de la feuille de protection 4 qui peut déborder légèrement latéralement sur le bord 27 de l'ébauche, surplombe la paroi cylindrique 18 de la matrice.

C'est alors que l'on abaisse le poinçon 6. Au cours de cette étape, la membrane 24 vient tout d'abord au contact de la zone de pourtour 17 de la feuille de protection 4 et la presse à ce niveau contre le bord 27 de l'ébauche 3.

Dans cette position, l'anneau de blocage 22, 23 est alors soutenu par la bague d'appui 30. C'est alors que le poinçon s'abaisse davantage. Il vient tout d'abord au contact de la feuille 4 en son milieu, par l'intermédiaire de la membrane 24, puis s'étale progressivement contre la feuille 4 par une déformation continue à partir du centre, provoquant ainsi l'échappement de l'air emprisonné entre la feuille 4 et l'ébauche 3. On continue à augmenter la force agissant sur le poinçon 6 jusqu'à la valeur nécessaire à une adhérence totale de la feuille 4 à l'ébauche 3. Pendant ce pressage, les fentes 40 ou 42 percées dans la membrane 24 servent à assurer un écoulement homogène de l'air contenu entre la feuille 4 et la surface de l'ébauche, mais elles permettent aussi l'écoulement de l'air emprisonné entre la membrane 24 et la feuille 4.

**Revendications**

1. Procédé pour recouvrir la face concave d'une ébauche (3) de verre de lunettes par une feuille (4) de recouvrement en matière plastique transparente, dans lequel on presse la feuille contre l'ébauche à l'aide d'un organe de pressage élastique (6) tout en éliminant l'air, caractérisé en ce que l'on insère, entre l'organe de pressage élastique (6) et la feuille (4) de recouvrement, une membrane élastique (24, 32) qui se superpose à l'ébauche (3) pourvue de la feuille (4), que l'on abaisse avant ou pendant le pressage proprement dit, et grâce à laquelle on peut appliquer de façon homogène toute la zone de pourtour de la feuille (4) contre le bord (27) de l'ébauche (3).

2. Procédé selon la revendication 1, caractérisé en ce que au cours du pressage, on augmente la pression exercée par la membrane sur la zone de pourtour au fur et à mesure de la progression de l'application de l'organe de pressage élastique, notamment en abaissant la membrane (24, 32) en dessous du niveau du bord (27) de l'ébauche (3).

3. Dispositif de mise en oeuvre du procédé selon la revendication 1, comprenant une presse comportant une matrice (1) et un organe de pressage (6) disposé sur une plaque d'appui (14), caractérisé en ce que la plaque d'appui (14) est reliée à un anneau de blocage (22, 23, 33, 34) qui maintient une membrane élastique (24, 32) en dessous de l'organe de pressage (6).

4. Dispositif selon la revendication 3, caractérisé en ce que l'anneau de blocage (22, 23, 33, 34) peut coulisser sur des boulons filetés (20, 35) fixés sur la plaque d'appui (14) et est maintenu dans sa position finale basse par une butée réglable tels des écrous (19, 38) sur les boulons.

5. Dispositif selon la revendication 3 ou 4, caractérisé par la mise en place sur la matrice (1), d'une bague d'appui (30), qui fixe la position finale basse de l'anneau de blocage (22, 23) au cours du pressage.

6. Dispositif selon la revendication 5, caractérisé en ce que la bague d'appui (30) est réglable en hauteur.

7. Dispositif selon les revendications 3 à 6, caractérisé par la mise en place, sur le corps du boulon fileté (20), d'un ressort à spirales (26) qui s'appuie contre l'anneau de blocage (22, 23).

8. Dispositif selon les revendications 3 et 4, caractérisé par la mise en place, entre l'anneau de blocage (33, 34) de la membrane (32) et l'anneau (15) d'assemblage de l'organe de pressage (6) et de la plaque d'appui (14), de manchons (37), qui, après un déplacement initial entre la plaque d'appui (14) et l'anneau de blocage (33, 34) permettent l'établissement d'une liaison souple entre eux.

9. Dispositif selon l'une des revendications 3 à 8, caractérisé en ce que que la membrane (24, 32) est une feuille à haute limite élastique, qui se compose d'une matière du type caoutchouc ayant une tension de rupture de l'ordre de 6 à 10 N/mm², et une élongation à la rupture de l'ordre de 400 à 800 % et une résistance au déchirement de l'ordre de 100 à 400 N/cm.

10. Dispositif selon la revendication 9, caractérisé en ce que la membrane (24) est percée le long d'un cercle, dont le diamètre correspond à celui de l'ébauche en verre (3), d'incisions (40, 42) en forme de fentes.

11. Dispositif selon la revendication 10, caractérisé en ce que lesdites incisions (42) ont la forme de fentes accolées deux par deux de façon à former un angle α, le sommet de l'angle étant alternativement dirigé radialement dans un sens ou l'autre.

## Patentansprüche

1. Verfahren zum Aufkaschieren einer Deckfolie (4) aus durchsichtigem Kunststoff auf die konkave Oberflaeche eines Brillenglas-Rohlings (3), bei dem die Folie unter Entfernung der Luft mit Hilfe eines elastischen Presskoerpers (6) auf den Glas-Rohling aufgepresst wird, dadurch gekennzeichnet, dass zwischen den elastischen Presskoerper (6) und die Deckfolie (4) eine den die Folie (4) tragenden Rohling (3) ueberspannende elastische Membran (24, 32) zwischengeschaltet wird, die vor oder waehrend des eigentlichen Pressvorgangs auf den die Folie (4) tragenden Rohling (3) abgesenkt wird, und mit deren Hilfe die gesamte Umfangszone der Folie (4) gleichmaessig gegen den Rand (27) des Rohlings (3) angedrueckt werden kann.

2. Verfahren nach Anspruch 1, dadurch gekennzeichnet, dass im Laufe des Pressvorgangs der durch die Membran auf die Umfangszone ausgeuebte Druck mit fortschreitendem Absenken des elastischen Presskoerpers erhoeht wird, insbesondere indem die Membran (24, 32) unter das Niveau des Randes (27) des Rohlings abgesenkt wird.

3. Vorrichtung zur Durchfuehrung des Verfahrens nach Anspruch 1, mit einer einen Matrizenkoerper (1) und einen an einer Tragplatte (14) angeordneten Presskoerper (6) umfassenden Presse, dadurch gekennzeichnet, dass an der Tragplatte (14) ein Haltering (22, 23, 33, 34) angeordnet ist, der eine elastische Membran (24, 32) in einer Stellung unterhalb des Presskoerpers (6) haelt.

4. Vorrichtung nach Anspruch 3, dadurch gekennzeichnet, dass der Haltering (22, 23, 33, 34) auf an der Tragplatte (14) befestigten Gewindebolzen (20, 35) gleitend angeordnet, und in seiner unteren Endstellung durch einen auf den Gewindebolzen verstellbaren Anschlag wie Muttern (19, 38) gehalten ist.

5. Vorrichtung nach Anspruch 3 oder 4, gekennzeichnet durch einen auf dem Matrizenkoerper (1) angeordneten Stuetzring (30), der die untere Endstellung des Halteringes (22, 23) beim Pressvorgang bestimmt.

6. Vorrichtung nach Anspruch 5, dadurch gekennzeichnet, dass der Stuetzring (30) in der Hoehe verstellbar angeordnet ist.

7. Vorrichtung nach Anspruch 3 bis 6, dadurch gekennzeichnet, dass auf dem Schaft der Gewindebolzen (20) eine sich gegen den Haltering (22, 23) abstuetzende Wendelfeder (26) angeordnet ist.

8. Vorrichtung nach Anspruch 3 und 4, dadurch gekennzeichnet, dass zwischen dem Haltering (33, 34) fuer die Membran (32) und dem den Presskoerper (6) an der Tragplatte (14) befestigenden Montagering (15) Distanzhuelsen (37) angeordnet sind, die nach einer anfaenglichen Relativbewegung zwischen der Tragplatte (14) und dem Haltering (33, 34) eine kraftschluessige Verbindung zwischen diesen herstellen.

9. Vorrichtung nach einem der Ansprueche 3 bis 8, dadurch gekennzeichnet, dass die Membran (24, 32) aus einer hochelastischen Folie aus einem gummielastischen Werkstoff mit einer Reissspannung von 6 bis 10 N/mm², einer Reissdehnung von 400 bis 800 % und einer Weiterreissfestigkeit von 100 bis 400 N/cm besteht.

10. Vorrichtung nach Anspruch 9, dadurch gekennzeichnet, dass die Membran (24) mit entlang einer dem Durchmesser der Glas-Rohlinge (3) entsprechenden Kreislinie mit schlitzartigen Durchbrechungen (40, 42) versehen sind.

11. Vorrichtung nach Anspruch 10, dadurch gekennzeichnet, dass jeweils zwei schlitzartige Durchbrechungen (42) unter einem Winkel α keilfoermig zueinander angeordnet, und die keilfoermigen Schlitze radial abwechselnd in jeweils entgegengesetzter Richtung ausgerichtet sind.

## Claims

1. A method of covering the concave surface of a blank (3) for a spectacle lens with a covering sheet (4) of transparent plastics material, in which the sheet is pressed against the blank by means of an elastic pressing member (6) with elimination of air, characterised in that there is inserted, between the elastic pressing member (6) and the covering sheet (4), an elastic membrane (24, 32) which is superposed on the blank (3) provided with the sheet (4), and lowered before or during the pressing itself, and owing to which the whole peripheral zone of the sheet (4) may be applied uniformly against the edge (27) of the blank (3).

2. A method according to claim 1, characterised in that during pressing the pressure exercised by the membrane on the peripheral zone is increased as application of the elastic pressing member progresses, notably while lowering the membrane (24, 32) below the level of the edge (27) of the blank (3).

3. Device for carrying out a method according to claim 1, comprising a press including a matrix (1) and a pressing member (6) arranged on a contact plate (14), characterised in that the contact plate (14) is connected to a clamping ring (22, 23, 33, 34) which retains an elastic membrane (24, 32) below the pressing member (6).

4. Device according to claim 3, characterised in that the clamping ring (22, 23, 33, 34) may slide on threaded bolts (20, 35) fixed on the contact plate (14) and is held in its final lower position by an adjustable abutment such as nuts (19, 38) on the bolts.

5. Device according to claim 3 or 4, characterised in that there is positioned on the matrix (1) a contact ring (30) which fixes the final lower position of the clamping ring (22, 23) during pressing.

6. Device according to claim 5, characterised in that the contact ring (30) is adjustable in height.

7. Device according to one of claims 3 to 6, characterised in that there is positioned, on the body of the threaded bolt (20), a spiral spring (26) which makes contact with the clamping ring (22, 23).

8. Device according to claim 3 or 4, characterised in that there are positioned, between the clamping ring (33, 34) of the membrane (32) and the ring (15) for assembly of the pressing member (6) and of the contact plate (14), sleeves (37) which, after initial displacement between the contact plate (14) and the clamping ring (33, 34) allow establishing of a flexible connection between them.

9. Device according to one of claims 3 to 8, characterised in that the membrane (24, 32) is a sheet having a high elastic limit, composed of a rubber-type material having a rupture stress of the order of 6-10 N/mm², an elongation at rupture of the order of 400 % to 800 % and a tear resistance of the order of 100 to 400 N/cm.

10. Device according to claim 9, characterised in that the membrane (24) is pierced, along a circle of which the diameter corresponds to that of the glass blank (3), with slot-shaped incisions (40, 42).

11. Device according to claim 10, characterised in that said incisions (42) have the shape of slots associated with each other two-by-two to form an angle $\alpha$, the summit of the angles being radially directed in alternate directions.

**Fig. 1**

1

**Fig.2**

**Fig.3**

Fig. 4

4

0 128 802

*Fig. 5*

*Fig. 6*